(19) Europäisches Patentamt
European Patent Office
Office européen des brevets

(11) **EP 2 551 650 B1**

(12) **EUROPEAN PATENT SPECIFICATION**

(45) Date of publication and mention
of the grant of the patent:
**25.09.2019 Bulletin 2019/39**

(51) Int Cl.:
***G01F 25/00*** *(2006.01)*     ***G01D 18/00*** *(2006.01)*

(21) Application number: **11175606.0**

(22) Date of filing: **27.07.2011**

(54) **Calibration method**

Kalibrierverfahren

Procédé d'étalonnage

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.01.2013 Bulletin 2013/05**

(73) Proprietor: **Endress+Hauser Consult AG
4153 Reinach (CH)**

(72) Inventor: **Vaissiére, Dimitri
68130 Witterdorf (FR)**

(74) Representative: **Andres, Angelika Maria
Endress+Hauser (Deutschland) AG+Co. KG
PatServe
Colmarer Strasse 6
79576 Weil am Rhein (DE)**

(56) References cited:
**US-A1- 2004 220 761**     **US-A1- 2006 052 959**
**US-A1- 2008 140 331**

- **JEAN-MICHEL POU, DIMITRI VAISSIÈRE: "La signature des processus d'étalonnage: les étalonnages vus sous l'angle statistique", ACTES DU CONGRÉS INTERNATIONAL DE MÉTROLOGIE LYON 2005, 20 June 2005 (2005-06-20), - 23 June 2005 (2005-06-23), XP002666653,**
- **M. THOMANN ET AL: "An efficient monitoring concept with control charts for on-line sensors", WATER SCIENCE AND TECHNOLOGY, vol. 46, no. 4-5, 1 August 2002 (2002-08-01), pages 107-116, XP055489964, ISSN: 0273-1223, DOI: 10.2166/wst.2002.0563**
- **CRENNA F ET AL: "Probabilistic measurement evaluation for the implementation of the Measuring Instrument Directive", MEASUREMENT, INSTITUTE OF MEASUREMENT AND CONTROL. LONDON, GB, vol. 42, no. 10, 1 December 2009 (2009-12-01), pages 1522-1531, XP026697081, ISSN: 0263-2241, DOI: 10.1016/J.MEASUREMENT.2009.07.012 [retrieved on 2009-08-22]**

**Description**

The present invention relates to a method of calibration of a measurement device, wherein the measurement device performs measurements according to at least one predefined operating procedure, during which at least one given value of a quantity to be measured by the device is provided by a corresponding reference or standard, and measured and indicated by the device, and the indicated measurement indications and the corresponding given values of the measured quantity are recorded.

Measurement devices are used in nearly all branches of industry for measuring physical quantities, in particular quantities related to ongoing production processes. Measurement indications indicating the value of the quantity measured by the device are for example commonly used in process automation for monitoring, controlling and/or regulating a production process at a measurement site.

To this extend there is a wide range of measurement devices on the market, like for example level measurement devices for measuring a level of a product in a container, flow meters for measuring a flow of a product through a pipe, temperature measurement devices or pressure measurement devices.

In order to ensure, that theses devices fulfill certain measurement properties specified for them, in particular a specified measurement accuracy, and/or comply to certain standards, they are calibrated and if necessary adjusted before use.

Calibration is a commonly used procedure for establishing a relation for obtaining a measurement result for a measured quantity from a measurement indication of a measurement device. Also calibration is used to check conformity of a device to a given specification. In both cases the measurement device performs at least one measurement task according to a given operating procedure, during which at least one given value of the quantity to be measured by the device is provided by a corresponding reference or standard. A typical operating procedure includes for example measurements of a minimal and a maximal value of the quantity, within a measurement range of the device. During the operation procedure, the values of the quantity provided by the reference or standard and the corresponding measurement indications of the measurement device are recorded. Based on this data the corresponding measurement errors are calculated, which are equal to the differences between the values of the measurement indications and the corresponding values of the quantity to be measured provided by the reference or standard.

In addition a maximal permissible error (MPE) between the values of the quantity provided by the standard or reference and the corresponding measurement indications of the device can be determined based on an uncertainty inherent to the quantity provided by the reference or standard and the measurement uncertainty inherent to the measurement device. In case the measurement errors between the values of the quantity provided by the standard or reference and the corresponding measurement indications derived by the measurement device exceed the maximal permissible error (MPE), the device is considered not to conform. As a consequence, e.g. adjustment or repair of the measurement device is required, which can then be performed based on the data obtained during the calibration procedure. This includes for example adjustments of offset, gain and span of the measurement indication.

If the measurement errors do not exceed the maximum permissible error (MPE) conformity of the device is declared and generally no additional actions are performed.

Due to the measurement uncertainty inherent to the measurement device, measurement indications derived by the measurement device when measuring a quantity of a given value can statistically be described by a probability distribution extending over a range of values determined by the measurement uncertainty. In consequence the maximal permissible error (MPE) should generally by set to be larger than the measurement uncertainty. In that case, values of the measurement indications, which differ from the given value by less than the measurement uncertainty, do not exceed the maximal permissible error (MPE).

Since conformity of the device will be declared, as long as the measurement indications do not exceed the maximal permissible error (MPE), a device will be considered to conform, even if the values of the measurement indications recorded during calibration have an extremely low probability of occurrence according to the statistical probability distribution. In case a recorded value of the measurement indication has an extremely low probability of occurring due to the measurement uncertainty of the device, there is a high probability, that it occurred because of an impaired measurement property of the device.

Also, this calibration method is incapable of detecting systematic measurement errors or drifts of the measurement indications, when the resulting deviations caused by this measurement error or drift do not exceed the maximal permissible error (MPE).

Another problem inherent to calibration procedures are effects of the calibration procedure itself on the calibration results. As an example, the temperature or temperature variations at the calibration site may have an effect on the measurement indications obtained during the performance of the operating procedure. In consequence a measurement error discovered during calibration could be caused by an impaired property of the device and/or by the calibration procedure itself. A numerical approach to this problem is described in the paper 'La Signature Des Processus D'Etalonnage: Les Etalonnages Vus Sous L'Angle Statistique' by Jean-Michel Pou and Dimitri Vaissiere published at the conference Congres de Métrologie de Lyon in 2005.

There it is described to identify variables pertinent to the calibration process that affect the measurement indications of the device during calibration. Variables varying on a timescale, which is short compared to the duration of the calibration will manifest themselves in the measurement indications in the same way as a random error. Variables varying on a timescale, which is long compared to the duration of the calibration will manifest themselves in the measurement indications in the same way as a systematic error, e.g. a drift. The operation procedure described in this paper foresees measurements of a quantity to be measured provided by the calibration site. Based on the obtained measurement indications the coefficients of a regression line representing the measured values as a function of the quantities provided are determined.

In addition a statistically representative number of simulations is performed to determine a statistical distribution of the coefficients. These simulations are based on measurement properties of a perfect faultless device and simulate the effects of the variables related to the calibration process and the timescales on which they vary. Each simulation renders a coefficient pair. Plotted in a diagram with coefficients as abscissa and ordinate, the coefficient pairs form a cloud representing their distribution.

In case the coefficients determined during the real performance of the calibration fall within this cloud, it can be concluded, that the measurement error observed during calibration is due to the calibration process. In case they are located well outside this cloud, they could be due to an impaired measurement property of the device. In the later case it is assumed as a working hypothesis that the observed measurement error is due to the device. This hypothesis is tested by repeating the entire simulation of the calibration process. This time however, the simulations are not based on a perfect device, but on a device having the observed systematic measurement error. Again each simulation renders a coefficient pair. Again these pairs, if plotted in the diagram mentioned above, form a second cloud. Using statistical methods for hypotheses testing, it can be determined, whether the coefficients determined during the real performance of the calibration belong to the first or the second cloud with a given level of significance. This method allows to determine with a given level of significance, whether a detected measurement error is due to the device, or due to the calibration process itself. It does not however solve the problem of its interpretation. Even if a detected error is solely due to the measurement device, compliance will be stated if it does not exceed the corresponding maximal permissible error, even though, there might be a high probability of an impaired measurement property of the device.

In US 2006/052959 A1 a method concerning the determination of a calibration curve for a specific linear sensor is described, which relates a sensor input to a sensor output. If for example a pressure sensor measures a pressure p it renders a corresponding sensor output, e.g. a measured voltage. In order to derive a measurement result for the measured pressure, it is necessary to know, which voltage corresponds to which pressure. Thus it is necessary to determine a calibration curve for each individual sensor, which is used to translate the measured voltages into measured pressure values. The problem treated in this document is, that different linear sensors of a given type have different calibration curves. According to the prior art cited in this document these curves are determined based on extensive measurements performed with each individual sensor. In order to avoid these extensive measurements, a method is described in US 2006/052959 A1, wherein operation profiles are determined for a statistically relevant number of sensors of the given type at different operating conditions, e.g. at different temperatures.

Following this only four measurements, namely measurement of the output at two different inputs and two different operation conditions, are performed with the individual sensor. From these four measurements a theoretical prediction is derived for a linear dependency of the output in relation to the input, and its linear dependency on the operation condition. This theoretical prediction is then compared to the operation profiles derived from the measurements performed on the statistically relevant number of devices of this type. The overall accuracy of the theoretical prediction is then determined by statistically interpreting the worst deviation of the actual measured output data from the theoretical prediction. If the tolerances found are higher than tolerable, the theoretical prediction cannot be applied.

US 2004/220761 A1 describes a quality control system for laboratory instruments.

As described therein the instruments perform a test on a quality control specimen.

If the test result falls within a control range, the device is considered compliant, if not, it will require adjustment. The control range is determined based on statistical data derived from measurements of the quality control specimen performed by other instruments. To this extend statistical properties of test results of other instruments, such as a group mean, a group median, a group standard variation etc. are determined. The range is determined based on a control rule formulated based on the statistical properties of the test results, e.g as group mean +/- group standard deviation. The other instruments used to obtain the statistical data do not necessarily have to be of the same type.

In the paper "Probabilistic measurement evaluation for the implementation of the Measurement Instrument Directive" published in Measurement, Institute of Measurement and Control, London, GB, Vol. 42, No. 10, 1 December 2009, pages 1522-1531, Francesco Crenna, Giovanni B. Rossi and Luca Bovio describe a probabilistic approach to conformity assessment, wherein conformity of newly produced water meters is determined using an acceptable error mask derived by a maximal permissible error (MPE), wherein a probability distribution of the water meter reading deviations of these water meters is determined, and wherein conformity assessment is performed by applying a functional model of the meter including the effect of a set of influence quantities, based on which it is possible to see how the reading deviations move, when the meter is operating under non-reference conditions.

It is an object of the invention to provide a method of calibration of a measurement device, which is capable of providing more detailed information on the measurement properties of the device.

To this extend the invention comprises a method of calibrating a measurement device, wherein :

- the measurement device performs measurements according to at least one predefined operating procedure, during which at least one given value of a quantity to be measured by the device is provided by a corresponding reference or standard, and measured and indicated by the device,
- the indicated measurement indications and the corresponding given values of the measured quantity are recorded,
- differences between the indicated measurement indications and the corresponding given values are determined,
- in case the differences do not exceed a maximum permissible error at least one predefined characteristic property of at least one of the measurement indications is quantitatively determined based on the recordings of the indicated measurement indications and the corresponding given values and compared to a corresponding threshold range,
- wherein each threshold range was previously determined based on a statistically representative distribution of the values of the respective property determined based on measurement indications recorded during execution of a statistically representative number of performances of measurements according to the respective operation procedure with measurement devices of the same type as the device under calibration, and
- a potentially impaired measurement property of the device under calibration is indicated if at least one determined characteristic property exceeds the respective threshold range.

It further comprises a first refinement of this method, wherein the threshold ranges for the predefined properties are quantitatively determined based on a statistical probability for a value of the respective property to be within the threshold range.

According to a second refinement of this embodiment, a level of reliability of an indication of a potentially impaired measurement property is determined based on the statistical probability of a value of this property to be within the corresponding threshold range.

According to a third refinement, the statistically representative distribution of the values of the respective property determined based on measurement indications recorded during execution of the statistically representative number of performances of measurements according to the respective operation procedure with measurement devices of the same type as the device under calibration, is a probability density function of the respective property.

According to a first embodiment of the invention, -at least one of the operating procedures foresees a single measurement of a given value of the quantity to be measured, and - the predefined property of the measurement indication of the device is a difference between the measurement indication and the given value of the quantity to be measured.

According to a second embodiment of the invention,

- at least one of the operation procedures foresees a repeated measurement of a given value of the quantity to be measured, and
- the characteristic properties comprise:
- a deviation between an average of the measurement indications and the given value of the quantity to be measured, and/or
- a root mean square deviation between the measurement indications and their average.

According to a refinement of the third refinement and the second embodiment the probability density functions for the properties are determined numerically based on

- formulas for calculating the properties based on the measurement indications,
- a number of repetitions of the measurement of the given value of the quantity, and
- a probability density function for the measurement indications for a single measurement of the given value of the quantity to be measured.

A further embodiment of the method according to the invention, the first, the second and/or the third refinement foresees a method, wherein

- at least one operation procedure foresees measurements of given values of the quantity distributed over a range of values of the quantity to be measured,
- a mathematical model describing the measurement indications as a function of a given order m the value of the property to be measured is provided, and

- the characteristic properties of the measurement indications comprise:

-- a property given by an m+1-dimensional vector of coefficients of the model determined by fitting the recorded measurement indications to the model, and
-- a mean square deviation between the recorded measurement indications and the corresponding measurement indications determined by the mathematical model based on the coefficients determined based on the recorded measurement indications and the respective given values of the measured quantity.

A further embodiment of the method according to the invention, the first, the second and/or the third refinement foresees a method, wherein

- at least one operation procedure foresees measurements of a given value of the quantity to be measured at selected values or over a predetermined range of values of a measurement related variable,
- a mathematical model describing the measurement indications as a function of a given order k of the variable and the given value of the quantity to be measured is provided, and
- the characteristic properties of the measurement indications comprise:

-- a property given by a k+1-dimensional vector of coefficients of the model determined by fitting the recorded measurement indications to the model, and
-- a mean square deviation between the recorded measurement indications and the corresponding measurement indications determined by the mathematical model based on the coefficients determined based on the recorded measurement indications, the values of the variable and the given value of the quantity to be measured.

According to a further refinement of the above mentioned methods according to the invention a length of a calibration time interval after which the device will require re-calibration is set based on a degree of compliance of the properties with the respective threshold ranges determined during its calibration.

According the a further refinement of the second and the last mentioned refinement of the method according to the invention, the length of the calibration time interval is additionally based on the level of reliability of the indication of the potentially impaired measurement property, in case a potentially impaired measurement property was indicated.

The invention and further advantages are explained in more detail using the figures of the drawing, in which several exemplary embodiments are shown.

| | |
|---|---|
| Fig. 1 shows: | a probability density function of measurement indications for measurements of a given value of a quantity to be measured; |
| Figures 2, 3 and 4 show: | measurement indications of measurement devices repeatedly measuring a given value of a quantity to be measured; |
| Fig. 5 shows: | measurement indications of a measurement device measuring a range of given values of a quantity to be measured; and |
| Fig. 6 shows: | measurement indications of a measurement device measuring a given value of a quantity to measured at different values of a measurement related variable. |

The method of calibration of a measurement device according to the invention comprises a first step, wherein the measurement device is set up to perform measurements of a quantity to be measured according to a predefined operating procedure. Obviously the quantity to be measured corresponds to the type of measurement device under calibration and its features and capabilities. Thus for a flow meter the quantity is e.g. a mass flow or a volumetric flow, for a pressure measurement device the quantity is e.g. an absolute, relative or differential pressure, and so on depending on the type of measurement device under calibration.

During each operating procedure at least one given value $Q_R$ of the quantity to be measured by the device is provided by a corresponding reference or standard, and measured and indicated by the device. Calibration is thus preferably performed on specially designed calibration sites capable of providing the given values $Q_R$ of the quantity to be measured with high accuracy based on a corresponding reference or standard. To this extend flow meters for measuring a flow of a product through a pipe are for example commonly calibrated on specially designed calibration rigs, capable of producing an accurately determinable flow through the flow meter under test and/or capable of sending an accurately determinable quantity of a product through the flow meter under test.

The operating procedures performed during calibration are typically predetermined and well established standard procedures specially developed for each of the various types of measurement devices available on the market.

They generally include at least one operating procedure, wherein at least one given value $Q_R$ of the quantity to be measured, within a measurement range of the measurement device is measured and indicated. Typically the values $Q_R$ include a minimum and a maximum value of the measurement range of the device. Depending on the device and the requirements regarding its application on a measurement site, this operating procedure can additionally be performed for one or more intermediate values $Q_R$ within the measurement range. Where ever this is feasible each given value $Q_R$ of the quantity is preferably measured repeatedly, rendering a predetermined number of measurement indications $MI_i$ rather than a single measurement indication MI. Thus in an operating procedure for a flow meter involving a measurement of an extremely high flow, e.g. a mass flow of 10 000 kg/h, this value will for example only be measured once due to the time, cost and effort involved in accurately providing this high mass flow. On the other hand, an operating procedure for a pressure transmitter involving a measurement of a pressure in the range of an atmospheric pressure, which can be easily established with high accuracy by a corresponding reference or standard, will for example foresee multiple repetitions of the measurement of this specific pressure value.

During execution of the respective operating procedure the given values $Q_R$ of the quantity provided by the reference or standard are measured and indicated by the device. The resulting measurement indications MI indicated by the device during the respective operating procedure and the corresponding given values $Q_R$ of the quantities provided by the reference or standard, are recorded.

Like described above with respect to the prior art a maximal permissible error MPE between the given values $Q_R$ of the quantity provided by the standard or reference and the corresponding measurement indications MI of the device can be determined based on an uncertainty inherent to the calibration process and the measurement uncertainty inherent to the measurement device.

Since calibration is frequently used to ensure, that the measurement device complies to a certain measurement accuracy specified for it, the maximal permissible error MPE is quite often determined based on the measurement accuracy specified for the device. For a specified measurement accuracy of e.g. 0,5 % of the maximum value of the quantity within the measurement range of the device, the maximum permissible error MPE at any given value $Q_R$ of the quantity provided by the reference or standard within the measurement range of the device can for example be defined as +/- 0,5 % of the maximum value of the measurement range. Thus the maximal permissible error MPE defines a range of values for the measurement indications MI for a given value $Q_R$ of the quantity, which might occur whilst the device complies to the measurement accuracy specified for it.

If, in the most simple case, of an operation procedure foreseeing only a single measurement of a single given value $Q_R$ of the quantity to be measured provided by the standard or reference, e.g. a single measurement of a given flow with a flow meter under calibration, the difference between the measurement indication MI obtained during this procedure and the given value $Q_R$ of the quantity to be measured exceeds the maximal permissible error MPE the device needs adjustment. If not, however, it is nonetheless possible, that the device exhibits an impaired measurement property, e.g. a systematic measurement error or a drift, which is to small to be detected by a calibration solely relying on the maximal permissible error MPE.

In order to determine, whether the device may potentially exhibit such an impaired measurement property, the measurement indications MI and the provided values $Q_R$ of the quantity to be measured are recorded during each operation procedure.

Based on these recordings, at least one predefined characteristic property E of the measurement indications MI of the device is quantitatively determined.

Each determined property E is then compared to a corresponding threshold range $E_R$, for the respective property E. For a one-dimensional property E, the threshold range $E_R$ is defined by the minimal and the maximal value $E_{min}$, $E_{max}$. of the properties E within the range. Each threshold range $E_R$ was previously determined based on a statistical distribution of the values of this property E for the type of measurement device under calibration. The statistical distribution is preferably a probability density function PDF(E) giving the probabilities of the values of the property E over the entire range of all possible values of the characteristic property E.

It is determined based on measurement indications MI recorded during execution of a statistically representative number of performances of the respective operation procedure with a preferably large number of measurement devices of the same type. Preferably a data base is established containing the measurement indications MI recorded during execution of the statistically representative number of performances of the respective operation procedure. Based on this data, the property E can be determined for every one of the statistically representative number operation procedures contained in the data base. The probability density function PDF(E) for the property E can thus be determined based on the resulting frequency distribution of the values of the property E.

Since calibrations using standard operating procedures are performed in large numbers, the data necessary for determining a statistically representative distribution of the respective property E can be easily collected.

Preferably the threshold ranges $E_R = [E_{min}, E_{max}]$ for the properties E are quantitatively determined based on a statistical probability $P(E_{min} < E < E_{max})$ for a value of this property E to be within this range $[E_{min}, E_{max}]$.

The statistical probability $P(E_{min} < E < E_{max})$ for a value of the property E to be within the threshold range $E_R$ is given by the integral over the probability density function PDF(E) over this range $[E_{min}, E_{max}]$, given by:

$$P(E_{\min} < E < E_{\max}) = \int_{E_{\min}}^{E^{\max}} PDF(E) \cdot dE$$

Based on the outcome of the comparison of the property E and the corresponding threshold range $E_R$, a potentially impaired measurement property of the device under calibration is indicated if at least one of the determined properties E exceeds the corresponding threshold range $E_R$.

In addition a level of reliability of the indication of a potentially impaired measurement property is preferably indicated. This level of reliability is determined based on the statistical probability $P(E_{min} < E < E_{max})$ of a value of this property E to be within the threshold range $E_R = [E_{min}, E_{max}]$, which was applied to quantify the threshold range $E_R$. In case statistically there is a high probability $P(E_{min} < E < E_{max})$ for the value of the property E to be within the range $[E_{min}, E_{max}]$, then there is a high probability, that a value of E determined during calibration exceeding this range $[E_{min}, E_{max}]$, is due to an impaired measurement property. In consequence the level of reliability is high, when statistically there is a low probability for the value of the property E to exceed the threshold range $E_R$ and vice versa.

Preferably the statistical probability $P(E_{min} < E < E_{max})$ is set at a certain value chosen according to the needs of the user of this method. Then the threshold range $E_R = [E_{min}; E_{max}]$ is determined based on the value set for the statistical probability $P(E_{min} < E < E_{max})$.

This method is based on the assumption, that the data used to determine the threshold ranges $E_R$ represents the measurement properties of an unimpaired measurement device. This assumption is usually fulfilled, because measurement devices requiring calibration, are calibrated in regular time intervals, which are scheduled such, that impaired measurement properties arising during their operation will be detected long before the resulting measurement errors may cause damages at their measurement sites. In consequence typically well over 90 %, for some types of devices even as many as 99%, of the calibrated devices are in full compliance and do not require adjustment or even repair. Obviously the method can be further improved, if only measurement indications MI of those previously calibrated devices are used to determine the threshold ranges $E_R$, for which full compliance was determined during their calibration.

In the following the method according to the invention is explained in more detail below based on a few exemplary embodiments.

The first example relates to an operation procedure foreseeing only a single measurement of a given value $Q_R$ of the quantity to be measured.

In case of a single measurement, a characteristic property $E_1(MI, Q_R)$ is e.g. a difference between the indicated value MI and the given value $Q_R$ of the quantity provided by the reference or standard. This property $E_1(MI, Q_R)$ is quantitatively determined and compared to the corresponding predetermined threshold range $E_{1R}(Q_R)$.

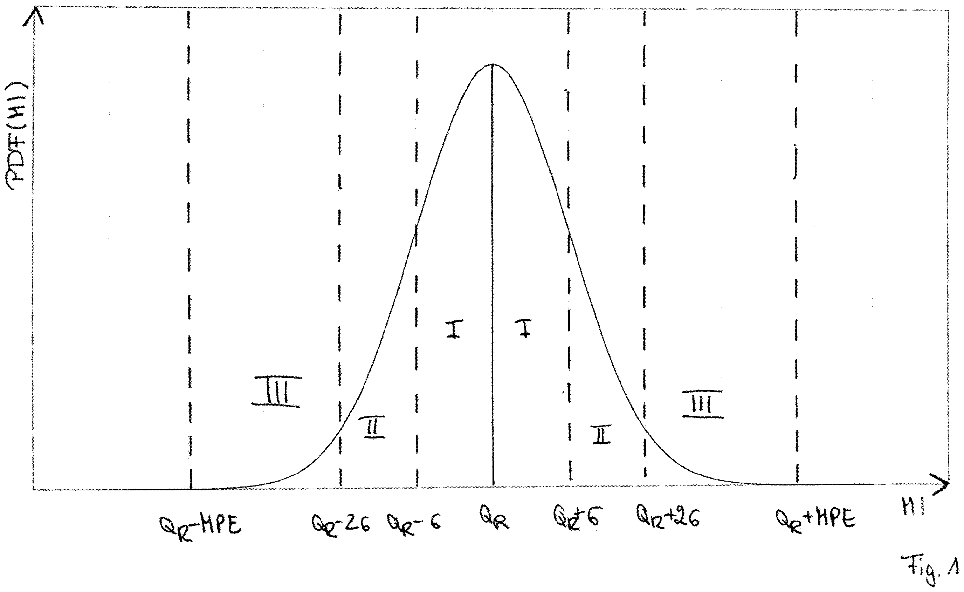

In the example described below, the measurement indications MI of the specific type of measurement device for the operation procedure of measurement of a single given value $Q_R$ of the quantity is statistically given by a Gaussian distribution. Fig. 1 shows a corresponding probability density function PDF(MI) of measurement indications MI of measurements of a given value $Q_R$ of the quantity, wherein the abscissa indicates the measurement indications MI of the measured quantity, and the ordinate indicates their respective frequency density . Obviously other devices could exhibit more complex probability density functions. A Gaussian distribution is chosen here as an example, because it allows an easy understanding of the method according to the invention.

The threshold range $E_{1R}(Q_R)$ for the difference between the measurement indication MI and the given value $Q_R$ of the quantity can thus be determined based on the statistical probability $P(E_{1min} < E < E_{1max})$ of this property $E_1(MI, Q_R)$ to be within the threshold range $E_{1R}(Q_R) = [E_{1min}; E_{1max}]$. For a Gaussian distribution of the measurement indications MI statistically 68 % of the measurement indications MI differ from the given value $Q_R$ by less then a standard deviation $\sigma$, 95 % of the measurement indications MI differ from the given value $Q_R$ by less then two standard deviations $2\sigma$.

Based on the individual needs of the user of this method a low statistical probability $P(E_{1min} < E < E_{1max})$, e.g. of 68%, can be set, leading to a threshold range $E_{1R}(Q_R)$ of one standard deviation $\sigma$, or a higher statistical probability $P(E_{1min} < E < E_{1max})$, e.g. of 95%, can be set, leading to a threshold range $E_{1R}(Q_R)$ of two standard deviations $2\sigma$. Lower values of the statistical probability $P(E_{1min} < E < E_{1max})$ enable the user to detect impaired measurement properties having small effects, but bare the risk of a higher number of erroneous indications of potentially impaired measurement properties of the device. Larger values of the statistical probability $P(E_{1min} < E < E_{1max})$ enable the user to detect only impaired measurement properties having larger effects, but reduce the risk of erroneous indications of impaired measurement properties of the device. Alternatively two or more values for the statistical probability $P(E_{1min} < E < E_{1max})$ and corresponding threshold ranges $E_{1R}(Q_R)$ can be used.

In case the value of the property $E_1(MI, Q_R)$ determined for the device during calibration exceeds the threshold range $E_{1R}(Q_R)$, e.g. because it exceeds a set threshold range $E_{1R}(Q_R)$ of one standard deviation $\sigma$, a potentially impaired measurement property of the device is indicated. In addition to this, a level of reliability of this indication can be indicated, which is based on the statistical probability $P(E_{1min} < E < E_{1max})$ of a value of this property $E_1(MI, Q_R)$ to be within the threshold range $E_{1R}(Q_R) = [E_{1min}; E_{1max}]$, here $[-\sigma, +\sigma]$.

In the example given above a high level of reliability for the indication of the impaired measurement property is indicated, if the difference between the measurement indication MI and the given value $Q_R$ of the quantity exceeds the threshold range $E_{1R}(Q_R)$ of two standard deviations $2\sigma$, and a lower level of reliability is indicated, if the difference between the measurement indication MI and the given value $Q_R$ of the quantity exceeds the threshold range $E_{1R}(Q_R)$ of one standard deviation $\sigma$.

The device under calibration would thus be considered not to have a potentially impaired measurement property, if the measurement indication MI obtained during this operating procedure falls within the center range I of $Q_R +/- \sigma$ of the statistical distribution shown in Fig. 1. A potentially impaired measurement property would be indicated with a low level of reliability, if the measurement indication MI obtained during this operating procedure falls within one of the two intermediate ranges II on both sides of the center range of $[Q_R - 2\sigma; Q_R - \sigma]$ and $[Q_{R+} \sigma; Q_{R+} 2\sigma]$. A potentially impaired measurement property would be indicated with a high level of reliability, if the measurement indication MI obtained during this operating procedure falls within one of the two outer ranges III of $[MI < Q_R - 2\sigma]$ and $[MI > Q_{R+} 2\sigma]$.

Additionally, if the measurement indication MI exceeds one of the outer limits $Q_R +/- MPE$, given by the maximal permissible error MPE, adjustment of the device is required.

The same method can be applied for operating procedures foreseeing repeated measurement of a single given value $Q_R$ of the quantity to be measured, which is repeatedly or continuously provided by the standard or reference.

In an operation procedure foreseeing a number of n measurements of the given value $Q_R$ of the quantity the given value $Q_R$ and the n measurement indications $MI_i$ derived during its measurement are recorded. Due to the repeated measurement a distribution of the measurement indications $MI_i$ is thus obtained, allowing a determination of predetermined properties $E(MI_i, Q_R)$ of the distribution which are then compared to corresponding threshold ranges $E_R(Q_R)$.

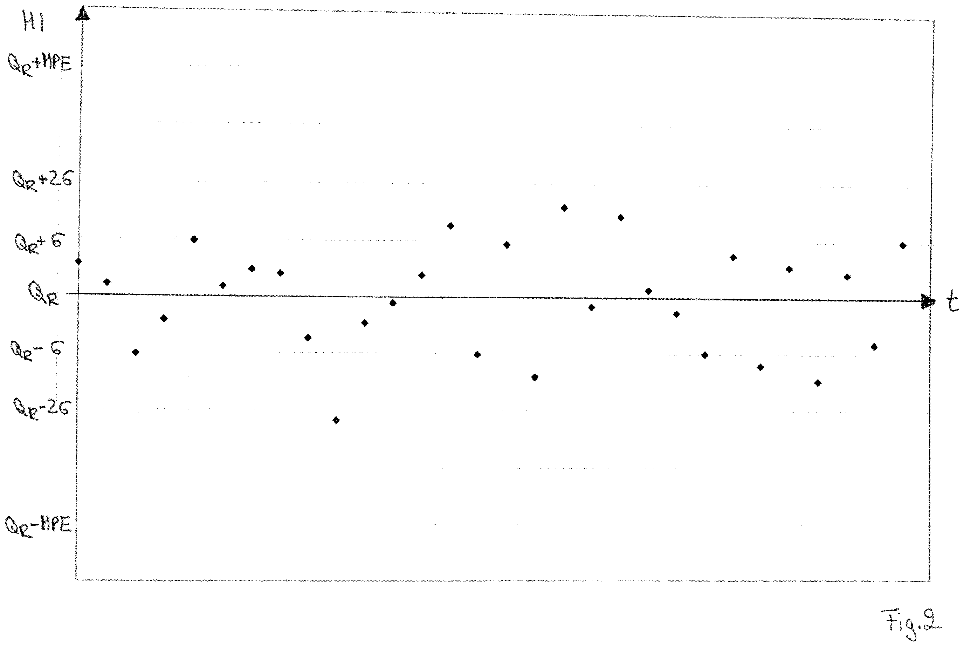

Figures 2, 3 and 4 show examples of a number of n measurement indications $MI_i$ of three measurement devices of the same type, derived during repeated measurement of the given value $Q_R$ of the quantity to be measured. In the diagrams, the abscissas indicate the time t at which the measurements were made, and the ordinates indicate the respective measurement indications $MI_i$. This example is based on the same type of device used in the previous example, for which the probability density function PDF(MI) for measuring the given value $Q_R$ a single time is given by the Gaussian distribution shown in Fig. 1. The measurement indications $MI_i$ are marked by diamonds.

In addition each diagram shows the range of values $[Q_R - MPE < MI < Q_R + MPE]$ the measurement indications might $MI_i$ have without exceeding the maximal permissible error MPE, the range of values $[Q_R - 2\sigma < MI < Q_R + 2\sigma]$ for the measurement indications $MI_i$ within two standard deviation $\sigma$ of the given value $Q_R$, and the range of values $[Q_R - \sigma < MI < Q_R + \sigma]$ for the measurement indications $MI_i$ within one standard deviation $\sigma$ of the given value $Q_R$

In all three examples, none of the measurement indications $MI_i$ exceed the range given by the maximal permissible error MPE between the value of the measurement indication $MI_i$ and the given value $Q_R$ of the quantity.

Thus classical calibration methods solely based on the maximal permissible error MPE would determine, that no adjustment of these devices is necessary.

Nonetheless, the n recorded measurement indications $MI_i$ of the three examples show clearly distinct distribution characteristics, which can be determined by quantitatively determinable values of predefined properties $E(MI_i, Q_R)$ of the distributions of the measurement indications $MI_i$ with respect to the value $Q_R$ of the quantity provided by the reference or standard.

These predefined properties $E(MI_i, Q_R)$ comprise for example:

a deviation $E_A$ of a mean value of the n measurement indications $MI_i$ from the value $Q_R$ of the quantity provided, given by:

$$E_A = \frac{1}{n} \sum_{i=1}^{n} \left( MI_i - Q_R \right)$$

and/or a root mean square deviation $E_S$ between the n measurement indications $MI_i$ and their average:

$$E_S = \sqrt{\frac{1}{n-1} \sum_{i=1}^{n} \left( MI_i - \left( E_A + Q_R \right) \right)^2}$$

Again threshold ranges $E_{RA}$ and $E_{RS}$ for these properties $E_A$ and $E_S$ are determined based on a statistically representative distribution of the values of the respective property $E_A$, $E_S$ determined based on measurement indications $MI_i$ recorded during execution of a statistically representative number of performances of measurements according to this operation procedure with measurement devices of the same type as the device under calibration. Again, the statistically representative distribution is preferably a probability density function $PDF(E_A)$, $PDF(E_S)$ for the values of the respective properties $E_A$, $E_S$.

These functions can be determined based on a statistically representative number of previously recorded sets of n measurement indications $MI_i$

derived by measuring the given value $Q_R$ of the quantity to be measured n times. In this case the properties $E_A$, $E_S$ are calculated for each set, and the probability density functions $PDF(E_A)$, $PDF(E_S)$ are determined based on the frequency densities of the values of the properties $E_A$, $E_S$ calculated for the statistically representative number of sets. These probability density functions $PDF(E_A)$, $PDF(E_S)$ are only valid for the exact number n of repetitions, for which they were determined. In consequence, if it is required to change the number n of repetitions to a different number m, a statistically representative number of previously recorded sets of m measurement indications $MI_i$ derived by measuring the given value $Q_R$ of the quantity to be measured m times, is needed to determine the corresponding probability density functions $PDF(E_A)$, $PDF(E_S)$.

Alternatively, the probability density functions $PDF(E_A)$, $PDF(E_S)$ can be determined numerically based on

- the formula for calculating the property $E_A$, $E_S$ based on the values of the measurement indications $MI_i$,
- the number n of repetitions of the measurement of the given value $Q_R$ of the quantity, and
- the probability density function $PDF(MI)$ for the measurement indications MI for a single measurement of the given value $Q_R$ of the quantity to be measured.

They can for example be determined numerically by using Monte-Carlo Simulations.

This form of numerical determination of the probability density functions $PDF(E_A)$, $PDF(E_S)$ has the advantage, that it can be preformed for any number n of repetitions of the measurement based the probability density function $PDF(MI)$ for the measurement indications MI for a single measurement of the given value $Q_R$ of the quantity to be measured.

Again the threshold ranges $E_{RA}$, $E_{RS}$ are preferably quantitatively determined based on a statistical probability $P(E_{Amin} < E_A < E_{Amax})$, $P(E_{Smin} < E_S < E_{Smax})$ for the value of the property $E_A$, $E_S$ to be within this range $[E_{Amin}, E_{Amax}]$, $[E_{Smin}, E_{Smax}]$.

Thus in the examples shown in Figures 2,3 and 4 for a number of n= 30 repetitions and the Gaussian distribution of the measurement indications MI for a single measurement of the given value $Q_R$ shown in Fig. 1, the threshold ranges $E_{RA}$, $E_{RS}$ become:

$$E_{RA} = \pm u_{1-\frac{\alpha}{2}} \cdot \frac{\sigma}{\sqrt{n}}$$

$$E_{RS} = \left\{ \sqrt{\frac{n \cdot \sigma^2}{\chi^2_{1-\frac{\alpha}{2}, n-1}}}, \sqrt{\frac{n \cdot \sigma^2}{\chi^2_{\frac{\alpha}{2}, n-1}}} \right\}$$

wherein

$\sigma$ is the root mean square deviation of the Gaussian distribution shown in Fig. 1,
$\alpha$ is a significance level,
u is a standardized Gaussian statistic, and
$\chi^2$ is a chi square statistic.

The significance level $\alpha$ commonly used in statistics denominates the probability of a value of the property $E_A$, $E_S$ to exceed its threshold range $E_{RA}$, $E_{RS}$ and is thus complementary to the probability $P(E_{Amin} < E_A < E_{Amax})$, $P(E_{Smin} < E_S < E_{Smax})$. Thus applying the same significance level $\alpha$ for determining both threshold ranges $E_{RA}$, $E_{RS}$ yields:

$$P(E_{Amin} < E_A < E_{Amax}) = P(E_{Smin} < E_S < E_{Smax}) = 1 - \alpha$$

For n=30 and a probability $P(E_{Amin} < E_A < E_{Amax})$, $P(E_{Smin} < E_S < E_{Smax})$ for the values of the properties $E_A$, $E_S$ to occur within their threshold ranges $E_{RA}$, $E_{RS}$ of 95 %, corresponding to a significance level a of 5 %, the threshold ranges $E_{RA}$, $E_{RS}$ in these examples become:

$$E_{RA} = \pm 0.36 \text{ and } E_{RS} = \{0.81, 1.37\}$$

Returning to the examples shown in figures 2 to 4, the numerical values of the properties $E_A$, $E_S$ obtained in these examples are listed in the table below.

|        | Fig 2  | Fig 3 | Fig4   |
|--------|--------|-------|--------|
| $E_A$  | -0.036 | 0.394 | -0.126 |
| $E_S$  | 0.952  | 0.237 | 1.536  |

In the example shown in Fig. 2 neither the deviation $E_A$ of the average of the measurement indications $MI_i$ from the given value $Q_R$, nor the root mean square deviation $E_S$ between the measurement indications $MI_i$ and their average exceeds the respective threshold range $E_{RA}$, $E_{RS}$ given above. Thus the device will be considered to be in full compliance and no potentially impaired property will be indicated.

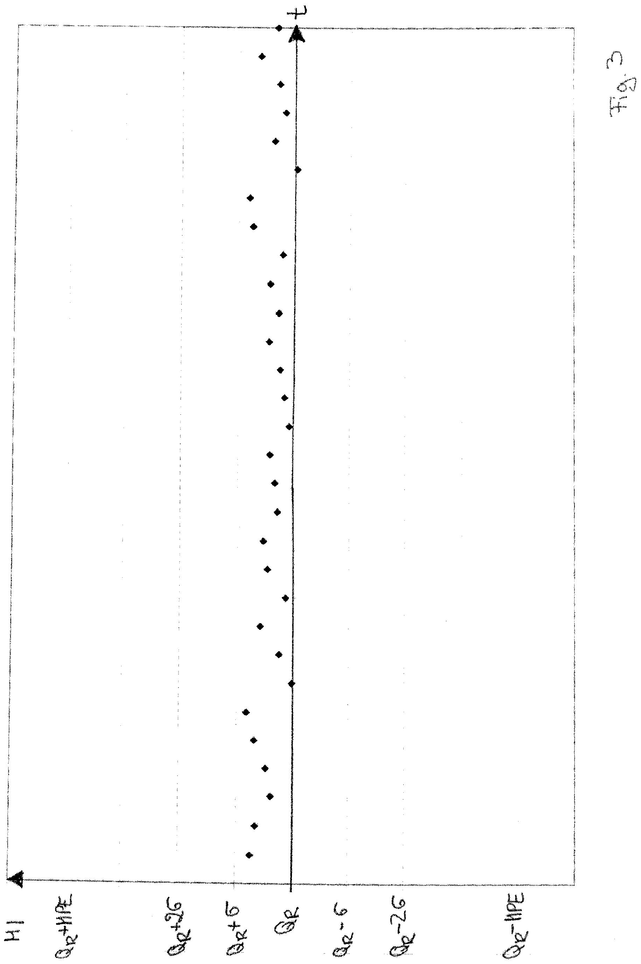

In the example shown in Fig. 3, however, the deviation $E_A$ of the average of the measurement indications $MI_i$ from the given value $Q_R$ exceeds the upper limit of 0,36 of the corresponding threshold range $E_{RA}$, and the root mean square deviation $E_S$ between the measurement indications $MI_i$ and their average is smaller than the lower limit of 0,81 of the threshold range $E_{RS}$ given above. This is an indication for a systematic drift of the measurement indications $MI_i$ of this device. Thus a potentially impaired measurement property of the device will be indicated. Since the threshold ranges $E_{RA}$, $E_{RS}$ were determined based on a high probability of 95 % for a value of the respective property $E_A$, $E_S$ to be within the range, a high level of reliability of this indication will be indicated.

In addition, the probability $P(E_A \geq 0,394)$ of values of the property $E_A$ to be larger or equal to the value of 0,394 determined for the measurement indications $MI_i$ and the probability $P(E_S \leq 0,237)$ of values of the property $E_S$ to be smaller or equal than the value of 0,237 determined for the measurement indications $MI_i$ can be calculated from the probability density functions $PDF(E_A)$, $PDF(E_S)$. For the example given in Fig. 3, the probability $P(E_A \leq 0,394)$ for the property $E_A$, to be smaller or equal 0,394 is 1,5 %. This means that the probability of a wrong rejection of the null hypothesis is smaller than 5%, thus this hypothesis is rejected considering that there is a real drift. The probability $P(E_S \leq 0,237)$ for the property $E_S$, to be smaller or equal 0,237 is close to zero. This means again that the probability of a wrong rejection of the null hypothesis is smaller than 5%, thus this hypothesis is rejected considering that there is a real repeatability defect.

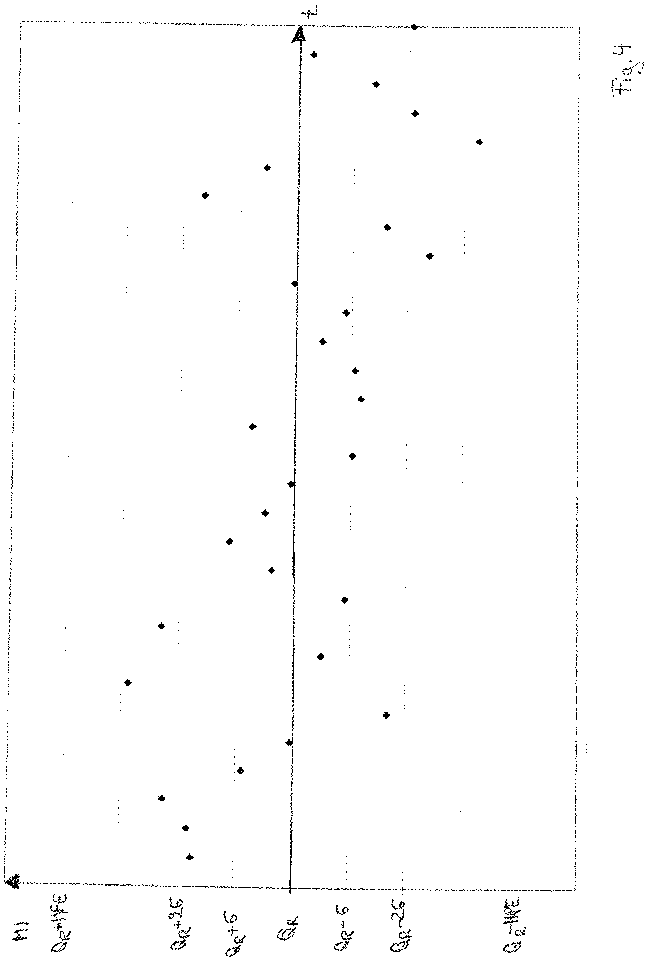

In the example shown in Fig. 4, the deviation $E_A$ of the average of the measurement indications $MI_i$ from the given value $Q_R$ does not exceed the threshold range $E_{RA}$ given above. The root mean square deviation $E_S$ between the measurement indications $MI_i$ and their average however clearly exceeds the upper limit of the threshold range $E_{RS}$. Thus there is no indication for a systematic drift, but a clear indication for a repeatability defect. Again, a potentially impaired measurement property of the device will be indicated, with a high level of reliability.

In addition, the probability $P(E_S \geq 1,536)$ of the occurrence of values of the property $E_S$ exceeding the upper limit of the respective threshold to be larger or equal than the value of 1,536 determined for the measurement indications $MI_i$ shown in Fig. 4 can be calculated from the probability density function $PDF(E_S)$. For the example given in Fig. 4, the probability $P(E_S \geq 1,536)$ for the property $E_S$, to be larger or equal to 1,536 is 0,4 %.

Another exemplary embodiment of the invention concerns operation procedures performed in order to determine a compliance of the obtained measurement indications $MI_i$ to a predefined mathematical model. A common example are operation procedures foreseeing measurements of given quantities $Q_{Ri}$ over a range $[Q_{Rmin}; Q_{Rmax}]$ of values $Q_{Ri}$ of the quantity to be measured, in order to determine e.g. linearity of the measurement indications $MI_i$.

The predefined mathematical model provides a formula f of a given order m for calculating the measurement indication $MI_m$ as a function of the given value $Q_R$ of the property to be measured. Thus:

$$MI_m = f(Q_R) = \sum_{i=0}^{m} c_i Q_R^i$$

During performance of the operation procedure the measurement indications $MI_i$ obtained when measuring the given values $Q_{Ri}$ of the quantity to be measured provided by the reference or standard are recorded over the range $[Q_{Rmin}; Q_{Rmax}]$ of values $Q_{Ri}$.

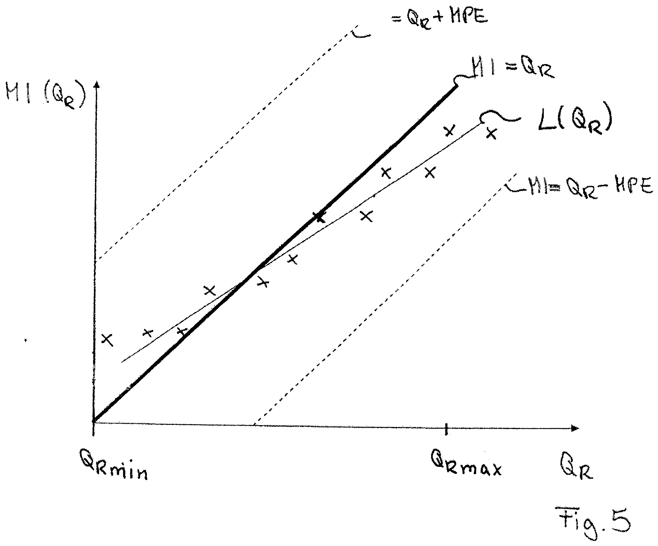

Fig. 5 shows an example of measurement indications $MI_i(Q_{Ri})$ obtained by a measurement device measuring various given values $Q_{Ri}$ evenly distributed over the range $[Q_{Rmin}; Q_{Rmax}]$. This can for example be measurement indications of a pressure sensor during measurement of a rising pressure provided according to a reference or standard. Again a maximal permissible error MPE between each indication $MI_i$ and the corresponding value $Q_{Ri}$ of the quantity provided by the reference or standard can be defined. This is shown in Fig. 5 by a dashed line at which the measurement indications MI equal $Q_R+MPE$ and a dashed line at which the measurement indications MI equal $Q_R-MPE$. These two dashed lines are located on both sides of a solid line at which the measurement indications MI equal the given value $Q_R$ to be measured.

In this case, the characteristic properties E of the measurement indications $MI_i$ preferably comprise a property $E_c$ given by an m+1-dimensional vector of the coefficients $c_0, c_1, ....., c_m$ determined by fitting of the recorded measurement indications $MI_i$ to the model:

$$E_c = \begin{pmatrix} c_0 \\ c_1 \\ \vdots \\ c_m \end{pmatrix}$$

and a mean square deviation $E_\Delta$ between the recorded measurement indications $MI_i$ and the corresponding measurement indications $MI_m$ determined by the mathematical model based on the coefficients $E_c$ determined based on the recorded measurement indications $MI_i$ and the respective given values $Q_{Ri}$ of the measured property.

$$E_\Delta = \sqrt{\frac{1}{n-(m+1)} \sum_{i=1}^{n} \left( MI_i - f(E_c, Q_{Ri}) \right)^2}$$

In case of a linear mathematical model, the function $f(c_0, c_1; Q_{Ri})$ becomes a straight line $L(Q_R)$, as shown in Fig. 5, which is fitted to the recorded measurement indications $MI_i$ e.g. by a least square fit. Thus the property $E_c$ is a two-dimensional vector determined by:

$$E_c = \left\{ c_0, c_1 \ \middle| \ \min\left( \sum_{i=1}^{n} \left( MI_i - (c_0 + c_1 Q_{Ri}) \right)^2 \right) \right\}$$

and the a mean square deviation $E_\Delta$ is given by:

$$E_\Delta = \sqrt{\frac{1}{n-2} \sum_{i=1}^{n} \left( MI_i - f(E_c, Q_{Ri}) \right)^2}$$

Like in the previous examples, the properties $E_c$, $E_\Delta$ are compared to previously determined threshold ranges $E_{Rc}$, $E_{R\Delta}$ in order to detect a potentially impaired measurement property of the device. The only difference is, that the threshold range $E_{Rc}$ for the vector **C** of the coefficients $c_0, .., c_m$ is m+1-dimensional.

Again the threshold ranges $E_{Rc}$, $E_{R\Delta}$ for these properties $E_c$, $E_\Delta$ are determined based on a statistically representative distribution of the values of the respective property $E_c$, $E_\Delta$ determined based on measurement indications $MI_i$ recorded during execution of a statistically representative number of performances of measurements according to this operation procedure with measurement devices of the same type as the device under calibration. Again, the statistically representative distribution is preferably a joint probability density function $JPDF(E_c)$ and a probability density function $PDF(E_\Delta)$ for the values of the respective properties $E_c$, $E_\Delta$.

These probability density function $JPDF(E_c)$, $PDF(E_\Delta)$ are determined based on a statistically representative number of sets of measurement indications $MI_i$ previously recorded during performances of the same operating procedure. Again the properties $E_c$, $E_\Delta$ are calculated for each set, and the probability density functions JPDF($E_c$), PDF($E_\Delta$) are determined based on the frequency densities of the values of the properties $E_c$, $E_\Delta$ calculated for the statistically representative number of sets.

Like before the corresponding threshold ranges $E_{Rc}$, $E_{R\Delta}$ are set based on a predefined probability P for the corresponding properties $E_c$, $E_\Delta$ to occur within the respective threshold range $E_{Rc}$, $E_{R\Delta}$, which is preferably chosen according to the requirements of the user of the device.

In case the coefficients $c_0$, ..., $c_m$ follow a Gaussian distribution law, it is possible to calculate the threshold ranges $E_{Rc}$, $E_{R\Delta}$ analytically based on the set probability P and the probability density functions JPDF($E_c$), PDF($E_\Delta$). In all other cases, the threshold ranges $E_{Rc}$, $E_{R\Delta}$ will have to be determined numerically, e.g. by applying Monte-Carlo-Simulations.

Like in the previous example, a potentially impaired measurement property of the device is indicated if any of the properties $E_c$, $E_\Delta$ determined based on the measurement indications $MI_i$ exceeds the corresponding threshold range $E_{Rc}$, $E_{R\Delta}$. In addition a level of reliability of this indications can be indicated, based on the probability P applied to determine the respective threshold range $E_{Rc}$, $E_{R\Delta}$.

Another field of application for the method according to the invention concerns a potential dependency of the measurement indications MI on other measurement related variables T, like for example a temperature dependency of pressure measurement indications of a pressure measurement device.

In this respect, operation procedures are applied, wherein e.g. a given value $Q_R$ of the quantity to be measured is measured at selected values $T_R$ or over a predetermined range $[T_{min} < T_R < T_{max}]$ of values $T_R$ of the measurement related variable T. More complex calibration procedures may also foresee executing this operation procedure for a set of given values $Q_R$ or over a range values $Q_R$.

For the purpose of calibration the given values $Q_R$ of the quantity to be measured are again provided by a corresponding reference or standard. Preferably, the values $T_R$ of the measurement related variable T are also provided with high accuracy according to a corresponding reference or standard.

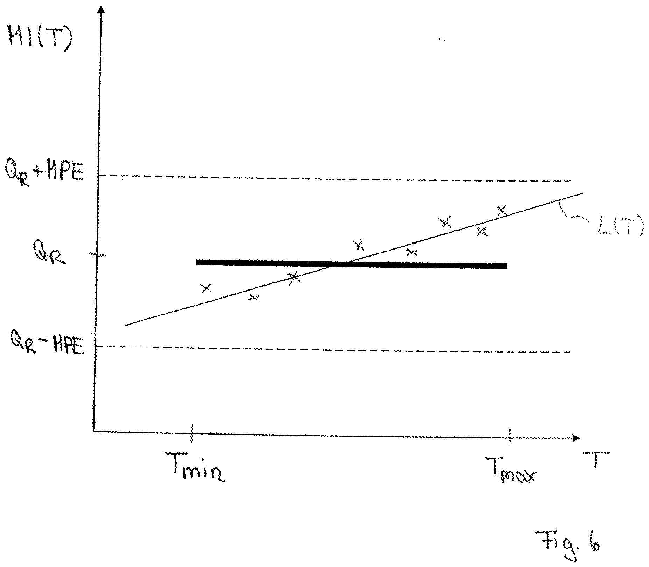

Fig. 6 shows an example of measurement indications $MI_i$ recorded during an operation procedure wherein the same given value $Q_R$ of the quantity to be measured was measured at selected values $T_{Ri}$ of the variable T evenly distributed over a given range of values $[T_{min}; T_{max}]$ for the variable T.

Again, like in classical calibration, a maximum permissible error MPE between the measurement indications $MI_i$ and the respective given value $Q_R$ of the quantity, can be determined based e.g. on the required or specified measurement accuracy of the device, requiring adjustment of the device, if any of the measurement indications MI differs from the given value $Q_R$ by more than the maximum permissible error MPE.

Like in the previous example, this measurement operation can be performed, in order to test compliance of the obtained measurement indications $MI_i$ to a predefined mathematical model, describing the measurement indications $MI_k$ as a function $g(T, Q_R)$ of a given order k of the variable T and the given value $Q_R$ of the measured quantity, e.g.

$$MI_K = g(T, Q_R) = Q_R + d_0 + d_1 T + d_2 T^2 + \ldots + d_k T^k$$

Again the characteristic properties E preferably comprise a k+1-dimensional vector of coefficients

$$E_d = \begin{pmatrix} d_0 \\ \vdots \\ \vdots \\ d_k \end{pmatrix}$$

determined by fitting of the recorded measurement indications $MI_i$ to the model, and a mean square deviation $E_\Delta$ between the recorded measurement indications $MI_i$ and the corresponding measurement indications $MI_k$ determined by the mathematical model based on the coefficients $E_d$ determined based on the recorded measurement indications $MI_i$, the respective given values $T_{Ri}$ of the variable and the given value $Q_R$ of the quantity to be measured.

In case of a linear model, the coefficients determined based on the recorded measurement indications $MI_i$ define a regression line L(T), as shown in Fig. 6.

Since the data necessary for the determination of the reference properties $E_R$ is available in abundance as a by-product of standard calibration methods which are performed in large numbers anyway, the threshold ranges $E_R$ and the corresponding statistical probabilities $P(E_{min} < E < E_{max})$ for a property E to be compliant with the threshold range

$E_R$ can be determined very accurately, and thus render a very precise definition of "natural" measurement properties of the respective type of measurement device. In consequence, it is possible to detect potentially impaired measurement properties of a device at a very early stage, i.e. long before its measurement indications exceed the maximal permissible error MPE. Early identification of potentially impaired measurement properties, gives the owner the possibility to take safety measures according to the requirement of his measurement site.

Especially for devices used in applications, wherein potential measurement errors may have severe consequences, the method gives the owner of the device the opportunity, to have the device thoroughly checked and adjusted or even replaced, long before the underlying problem has become so severe that the device does not comply to the maximum permissible error MPE any more.

To this extend narrow threshold ranges $E_R$ can be set, which enable the user to detect impaired measurement properties at a very early stage. Thus an increased reactivity can be achieved, e.g. in detecting a systematic drift of the measurement indications MI.

In addition a calibration time interval, after which the device should be re-calibrated, can be set based on a degree of compliance of the characteristic properties E determined during calibration with the corresponding reference properties $E_R$. In case a potentially impaired measurement property was indicated by the calibration the length of this interval is preferably additionally based the corresponding level of reliability of the respective indication.

Whereas today calibration time intervals for a specific type of device are regularly standard time intervals of a fixed length, it is now possible to adjust the length of the time interval according to the actual measurement properties of the device. Thus an extremely short calibration time interval will be set for a device, for which a potentially impaired measurement property was indicated with a high level of reliability. On the other hand, a very long calibration time interval can be safely set for a device, which is in full compliance with the threshold ranges $E_R$. In this case a calibration time interval can be set, which is longer than the fixed standard time interval foreseen for the type of device.

This is especially valuable in applications, wherein re-calibrations are costs and time intensive, e.g. because they require a whole section of a production site to be shut down, in order to move the device from the measurement site to the re-calibration site.

**Claims**

1. Method of calibrating a measurement device, wherein :

    - the measurement device performs measurements according to at least one predefined operating procedure, during which at least one given value ($Q_R$) of a quantity to be measured by the device is provided by a corresponding reference or standard, and measured and indicated by the device,
    - the at least one indicated measurement indication (MI) and the corresponding at least one given value ($Q_R$) of the measured quantity are recorded,
    - a difference between each of the at least one indicated measurement indication (MI) and the corresponding given value ($Q_R$) is determined,
    - in case the at least one difference does not exceed a maximum permissible error (MPE) at least one predefined characteristic property (E) of at least one of the at least one measurement indication (MI) is quantitatively determined based on the recordings of the at least one indicated measurement indication (MI) and the corresponding at least one given value ($Q_R$) and compared to a corresponding threshold range ($E_R$),
    - wherein each threshold range ($E_R$) was previously determined based on a statistically representative distribution of the values of the respective characteristic property (E) determined based on measurement indications (MI) recorded during execution of a statistically representative number of performances of measurements according to the respective operating procedure with measurement devices of the same type as the device under calibration, and
    - a potentially impaired measurement property of the device under calibration is indicated if said at least one determined characteristic property (E) exceeds the respective threshold range ($E_R$).

2. Method according to claim 1, wherein the threshold ranges ($E_R$) for each of the at least one predefined characteristic property (E) is quantitatively determined based on a statistical probability (P) for a value of the respective characteristic property (E) to be within the respective threshold range ($E_R$).

3. Method according to claim 2, wherein a level of reliability of an indication of a potentially impaired measurement property is determined based on the statistical probability (P) of a value of the respective characteristic property (E) to be within the respective threshold range ($E_R$).

**4.** Method according to claim 1,2 or 3, wherein the statistically representative distribution of the values of the respective characteristic property (E) determined based on measurement indications (MI) recorded during execution of the statistically representative number of performances of measurements according to the respective operating procedure with measurement devices of the same type as the device under calibration, is a probability density function (PDF(E)) of the respective characteristic property (E).

**5.** Method according to claim 1, 2, 3 or 4, wherein

- at least one of the operating procedures foresees a single measurement of the given value ($Q_R$) of the quantity to be measured, and
- the predefined characteristic property (E) of the measurement indication (MI) of the device is a difference ($E_1(MI, Q_R)$) between the measurement indication (MI) and the given value ($Q_R$) of the quantity to be measured.

**6.** Method according to claim 1, 2, 3 or 4, wherein

- at least one of the operating procedures foresees a repeated measurement of the given value ($Q_R$) of the quantity to be measured, and
- the characteristic properties (E) comprise:
- a deviation ($E_A$) between an average of the measurement indications ($MI_i$) and the given value ($Q_R$) of the quantity to be measured, and/or
- a root mean square deviation ($E_S$) between the measurement indications ($MI_i$) and their average.

**7.** Method according to claim 4 and 6, wherein the probability density functions ($PDF(E_A)$, $PDF(E_S)$) for the properties ($E_A$, $E_S$) are determined numerically based on

- formulas for calculating the properties ($E_A$, $E_S$) based on the measurement indications ($MI_i$),
- a number (n) of repetitions of the measurement of the given value ($Q_R$) of the quantity, and
- a probability density function (PDF(MI)) for the measurement indications (MI) for a single measurement of the given value ($Q_R$) of the quantity to be measured.

**8.** Method according to claim 1, 2, 3 or 4, wherein

- at least one of the operating procedures foresees measurements of given values ($Q_{Ri}$) of the quantity distributed over a range ($[Q_{Rmin}; Q_{Rmax}]$) of values of the quantity to be measured,
- a mathematical model describing the measurement indications ($MI_m$) as a function ($f(Q_R)$) of a given order (m) of the given value ($Q_R$) of the property to be measured is provided, and
- the characteristic properties (E) of the measurement indications ($MI_i$) comprise:
- a property ($E_c$) given by an m+1-dimensional vector (c) of
coefficients ($c_0$, ..., $c_m$) of the model determined by fitting the recorded measurement indications ($MI_i$) to the model, and
- a mean square deviation ($E_\Delta$) between the recorded measurement indications ($MI_i$) and the corresponding measurement indications ($MI_m$) determined by the mathematical model based on the
coefficients ($c_0$, ..., $c_m$) determined based on the recorded measurement indications ($MI_i$) and the respective given values ($Q_{Ri}$) of the measured quantity.

**9.** Method according to claim 1, 2, 3 or 4, wherein

- at least one of the operating procedures foresees measurements of the given value ($Q_R$) of the quantity to be measured at selected values ($T_{Ri}$) or over a predetermined range ($[T_{min} < T_R < T_{max}]$) of values ($T_R$) of a measurement related variable (T),
- a mathematical model describing the measurement indications (MIk) as a function ($g(T, Q_R)$) of a given order (k) of the variable (T) and the given value ($Q_R$) of the quantity to be measured is provided, and
- the characteristic properties (E) of the measurement indications ($MI_i$) comprise:
- a property ($E_d$) given by a k+1-dimensional vector of
coefficients ($d_0$,...,$d_k$) of the model determined by fitting the recorded measurement indications ($MI_i$) to the model, and

- a mean square deviation ($E_\Delta$) between the recorded measurement indications ($MI_i$) and the corresponding measurement indications ($MI_k$) determined by the mathematical model based on the coefficients ($d_0$, ..., $d_k$) determined based on the recorded measurement indications ($MI_i$), the values ($T_{Ri}$) of the variable and the given value ($Q_R$) of the quantity to be measured.

10. Method according to one of the previous claims, wherein
a length of a calibration time interval after which the device will require re-calibration is set based on a degree of compliance of each of the at least one characteristic property (E) with the respective threshold range ($E_R$) determined during the calibration.

11. Method according to claim 3 and 10, wherein a potentially impaired measurement property was indicated, and the length of the calibration time interval is additionally based on the level of reliability of this indication of the potentially impaired measurement property.

**Patentansprüche**

1. Verfahren der Kalibrierung eines Messgeräts, wobei:

   - das Messgerät Messungen gemäß mindestens einem vordefinierten Arbeitsverfahren durchführt, während derer mindestens ein gegebener Wert ($Q_R$) einer vom Gerät zu messenden Menge von einer entsprechenden Referenz oder einer entsprechenden Norm bereitgestellt, vom Gerät gemessen und angezeigt wird,
   - die mindestens eine angezeigte Messwertanzeige (MI) und der entsprechende mindestens eine gegebene Wert ($Q_R$) der gemessenen Menge aufgezeichnet werden,
   - eine Differenz zwischen jeder der mindestens einen angezeigten Messwertanzeige (MI) und dem entsprechenden gegebenen Wert ($Q_R$) ermittelt wird,
   - im Fall, dass die mindestens eine Differenz einen maximal zulässigen Fehler (MPE) nicht überschreitet, mindestens eine vordefinierte charakteristische Eigenschaft (E) von mindestens einer der mindestens einen Messwertanzeige (MI) basierend auf den Aufzeichnungen der mindestens einen angezeigten Messwertanzeige (MI) und dem entsprechenden mindestens einen gegebenen Wert ($Q_R$) quantitativ ermittelt und mit einem entsprechenden Schwellenbereich ($E_R$) verglichen wird,
   - wobei jeder Schwellenbereich ($E_R$) zuvor auf Basis einer statistisch repräsentativen Verteilung der Werte der jeweiligen charakteristischen Eigenschaft (E) ermittelt wurde, die auf Basis von Messwertanzeigen (MI) ermittelt wurde, die während der Ausführung einer statistisch repräsentativen Anzahl von Durchführungen von Messungen gemäß dem entsprechenden Arbeitsverfahren mit Messgeräten desselben Typs wie das in Kalibrierung befindliche Gerät aufgezeichnet wurden, und
   - eine möglicherweise gestörte Messeigenschaft des in Kalibrierung befindlichen Geräts angezeigt wird, falls besagte mindestens eine ermittelte charakteristische Eigenschaft (E) den zugehörigen Schwellenbereich ($E_R$) übersteigt.

2. Verfahren nach Anspruch 1, wobei die Schwellenbereiche ($E_R$) für jede der mindestens einen vordefinierten charakteristischen Eigenschaft (E) quantitativ auf Basis einer statistischen Wahrscheinlichkeit (P) ermittelt wird, dass ein Wert der jeweiligen charakteristischen Eigenschaft (E) innerhalb des jeweiligen Schwellenbereichs ($E_R$) liegt.

3. Verfahren nach Anspruch 2, wobei ein Zuverlässigkeitsmaß einer Anzeige einer möglicherweise gestörten Messeigenschaft auf Basis der statistischen Wahrscheinlichkeit (P) ermittelt wird, dass ein Wert der jeweiligen charakteristischen Eigenschaft (E) innerhalb des jeweiligen Schwellenbereichs ($E_R$) liegt.

4. Verfahren nach Anspruch 1, 2 oder 3, wobei die statistisch repräsentative Verteilung der Werte der jeweiligen charakteristischen Eigenschaft (E), die auf Basis von Messwertanzeigen (MI) ermittelt wurde, die während der Ausführung der statistisch repräsentativen Anzahl von Messungen gemäß dem jeweiligen Arbeitsverfahren mit Messgeräten desselben Typs wie das in Kalibrierung befindliche Gerät aufgezeichnet wurden, eine Wahrscheinlichkeitsdichtefunktion (PDF(E)) der jeweiligen charakteristischen Eigenschaft (E) ist.

5. Verfahren nach Anspruch 1, 2, 3 oder 4, wobei

   - mindestens eins der Arbeitsverfahren eine einzelne Messung des gegebenen Werts ($Q_R$) der zu messenden Menge vorsieht, und

- die vordefinierte charakteristische Eigenschaft (E) der Messwertanzeige (MI) des Geräts eine Differenz ($E_1$(MI, $Q_R$)) zwischen der Messwertanzeige (MI) und dem gegebenen Wert ($Q_R$) der zu messenden Menge ist.

6. Verfahren nach Anspruch 1, 2, 3 oder 4, wobei

- mindestens eins der Arbeitsverfahren eine wiederholte Messung des gegebenen Werts ($Q_R$) der zu messenden Menge vorsieht, und
- die charakteristischen Eigenschaften (E) Folgendes umfassen:
- eine Abweichung ($E_A$) zwischen einem Mittel der Messwertanzeigen ($MI_i$) und dem gegebenen Wert ($Q_R$) der zu messenden Menge, und/oder
- eine mittlere quadratische Abweichung (Es) zwischen den Messwertanzeigen ($MI_i$) und ihrem Mittel.

7. Verfahren nach den Ansprüchen 4 und 6, wobei die Wahrscheinlichkeitsdichtefunktionen (PDF($E_A$), PDF($E_S$) a) für die Eigenschaften ($E_A$, Es) digital ermittelt werden auf Basis von

- Formeln zur Berechnung der Eigenschaften ($E_A$, $E_S$) auf Basis der Messwertanzeigen ($MI_i$),
- einer Anzahl (n) an Wiederholungen der Messung des gegebenen Werts ($Q_R$) der Menge, und
- einer Wahrscheinlichkeitsdichtefunktion (PDF(MI)) für die Messwertanzeigen (MI) für eine einzelne Messung des gegebenen Werts ($Q_R$) der zu messenden Menge.

8. Verfahren nach Anspruch 1, 2, 3 oder 4, wobei

- mindestens eins der Arbeitsverfahren Messungen gegebener Werte ($Q_{Ri}$) der über einen Bereich ([$Q_{Rmin}$, $Q_{Rmax}$]) verteilten Menge von Werten der zu messenden Menge vorsieht,
- ein mathematisches Modell, das die Messwertanzeigen ($MI_m$) als Funktion (f($Q_R$)) einer gegebenen Ordnung (m) des gegebenen Werts ($Q_R$) der zu messenden Eigenschaft beschreibt, bereitgestellt wird, und
- die charakteristischen Eigenschaften (E) der Messwertanzeigen ($MI_i$) Folgendes umfassen:
- eine Eigenschaft ($E_c$), die gegeben ist durch einen m+1-dimensionalen Vektor (c) aus Koeffizienten ($c_0$, ..., $c_m$) des Modells, die durch Einpassung der aufgezeichneten Messwertanzeigen ($MI_i$) in das Modell ermittelt werden, und
- eine mittlere quadratische Abweichung ($E_\Delta$) zwischen den aufgezeichneten Messwertanzeigen ($MI_i$) und den entsprechenden Messwertanzeigen ($MI_m$), die durch das mathematische Modell basierend auf den auf Basis der aufgezeichneten Messwertanzeigen ($MI_i$) und der entsprechenden gegebenen Werte ($Q_{Ri}$) der gemessenen Menge ermittelten Koeffizienten ($c_0$, ..., $c_m$) ermittelt wird.

9. Verfahren nach Anspruch 1, 2, 3 oder 4, wobei

- mindestens eins der Arbeitsverfahren Messungen des gegebenen Werts ($Q_R$) der bei gewählten Werten ($T_{Ri}$) oder über einen vorbestimmten Bereich ([$T_{min} < T_R < T_{max}$]) von Werten ($T_R$) einer messtechnischen Variablen (T) zu messenden Menge vorsieht,
- ein mathematisches Modell, das die Messwertanzeigen ($MI_k$) als Funktion (g(T, $Q_R$)) einer gegebenen Ordnung (k) der Variablen (T) und des gegebenen Werts ($Q_R$) der zu messenden Menge beschreibt, bereitgestellt wird, und
- die charakteristischen Eigenschaften (E) der Messwertanzeigen ($MI_i$) Folgendes umfassen:
- eine Eigenschaft ($E_d$), die gegeben ist durch einen k+1-dimensionalen Vektor von Koeffizienten ($d_0$, ..., $d_k$) des Modells, die durch Einpassung der aufgezeichneten Messwertanzeigen ($MI_i$) in das Modell bestimmt werden, und
- eine mittlere quadratische Abweichung ($E_\Delta$) zwischen den aufgezeichneten Messwertanzeigen ($MI_i$) und den entsprechenden Messwertanzeigen ($MI_k$), die durch das mathematische Modell basierend auf den auf Basis der aufgezeichneten Messwertanzeigen ($MI_i$), den Werten ($T_{Ri}$) der Variablen und dem gegebenen Wert ($Q_R$) der zu messenden Menge ermittelten Koeffizienten ($d_0$, ..., $d_k$) ermittelt wird.

10. Verfahren nach einem der vorhergehenden Ansprüche, wobei eine Länge eines Kalibrierzeitintervalls, nach dem das Gerät eine Rekalibrierung erfordert, auf Basis eines Grades der Übereinstimmung jeder der mindestens einen charakteristischen Eigenschaft (E) mit dem jeweiligen, während der Kalibrierung ermittelten Schwellenbereich ($E_R$) festgelegt wird.

11. Verfahren nach den Ansprüchen 3 und 10, wobei eine möglicherweise gestörte Messeigenschaft angezeigt wurde und die Länge des Kalibrierzeitintervalls zusätzlich auf dem Maß der Zuverlässigkeit dieser Anzeige der möglicherweise gestörten Messeigenschaft basiert.

**Revendications**

1. Procédé d'étalonnage d'un appareil de mesure, pour lequel :

   - l'appareil de mesure effectue des mesures conformément à au moins une procédure opératoire prédéfinie, durant laquelle au moins une valeur donnée ($Q_R$) d'une quantité à mesurer par l'appareil est fournie par une référence ou un étalon correspondant, et mesurée et indiquée par l'appareil,
   - l'au moins une indication de mesure (MI) indiquée et l'au moins une valeur donnée ($Q_R$) de la quantité mesurée sont enregistrées,
   - une différence entre chacune de l'au moins une indication de mesure (MI) indiqué et la valeur donnée ($Q_R$) est déterminée
   - dans le cas où l'au moins une différence ne dépasse pas une erreur maximale admissible (MPE), au moins une propriété caractéristique (E) prédéfinie d'au moins l'une de l'au moins une indication de mesure (MI) est déterminée quantitativement sur la base de l'enregistrement de l'au moins une indication de mesure (MI) indiquée et l'au moins une valeur donnée ($Q_R$) correspondante, et comparée avec une gamme de seuil ($E_R$) correspondante,
   - chaque gamme de seuil ($E_R$) étant déterminée au préalable sur la base d'une distribution statistiquement représentative des valeurs de la propriété caractéristique (E) respective déterminée sur la base des indications de mesure (MI) enregistrées pendant l'exécution d'un nombre statistiquement représentatif de performances de mesures conformément à la procédure d'exploitation respective avec des appareils de mesure du même type que l'appareil sous étalonnage, et
   - une propriété potentiellement altérée de l'appareil sous étalonnage étant indiquée si l'au moins une propriété caractéristique (E) déterminée dépasse la gamme de seuil ($E_R$) respective.

2. Procédé selon la revendication 1, pour lequel les gammes de seuil ($E_R$) pour chacune des au moins une propriété caractéristique (E) prédéfinie sont déterminées quantitativement sur la base d'une probabilité statistique (P) qu'une une valeur de la propriété caractéristique (E) respective se situe dans la gamme de seuil ($E_R$) respective.

3. Procédé selon la revendication 2, pour lequel un niveau de fiabilité d'une indication d'une propriété de mesure potentiellement altérée est déterminé sur la base de la probabilité statistique (P) qu'une valeur de la propriété caractéristique (E) respective se situe dans la gamme de seuil ($E_R$) respective.

4. Procédé selon la revendication 1, 2 ou 3, pour lequel la distribution statistiquement représentative des valeurs de la propriété caractéristique (E) respective déterminée sur la base d'indications de mesure (MI) enregistrées pendant l'exécution du nombre statistiquement représentatif de performances de mesures selon la procédure respective avec des appareils de mesure du même type que l'appareil sous étalonnage, est une fonction de densité de probabilité (PDF(E)) de la propriété caractéristique (E) respective.

5. Procédé selon la revendication 1, 2, 3 ou 4, pour lequel

   - au moins l'une des procédures opératoires prévoit une mesure unique de la valeur donnée ($Q_R$) de la quantité à mesurer, et
   - la propriété caractéristique (E) prédéfinie de l'indication de mesure (MI) de l'appareil est une différence ($E_1$(MI, $Q_R$)) entre l'indication de mesure (MI) et la valeur donnée ($Q_R$) de la quantité à mesurer.

6. Procédé selon la revendication 1, 2, 3 ou 4, pour lequel

   - au moins l'une des procédures opératoires prévoit une mesure répétée de la valeur donnée ($Q_R$) de la quantité à mesurer, et
   - les propriétés caractéristiques (E) comprennent :
   - un écart ($E_A$) entre une moyenne des indications de mesure ($MI_i$) et la valeur données ($Q_R$) de la quantité à mesurer, et/ou
   - un écart quadratique moyen (Es) entre les indications de mesure ($MI_i$) et leur moyenne.

**7.** Procédé selon les revendications 4 et 6, pour lequel les fonctions de densité de probabilité (PDF(E$_A$), (PDF(E$_S$)) pour les propriétés (E$_A$, E$_S$) sont déterminées numériquement sur la base de/d'

- formules pour le calcul des propriétés (E$_A$, E$_S$) sur la base des indications de mesure (MI$_i$),
- un nombre (n) de répétitions de la mesure de la valeur données (Q$_R$) de la quantité, et
- une fonction de densité de probabilité (PDF(MI)) pour les indications de mesure (MI) pour une mesure unique de la valeur donnée (Q$_R$) de la quantité à mesurer.

**8.** Procédé selon la revendication 1, 2, 3 ou 4, pour lequel

- au moins l'une des procédures opératoires prévoit des mesures des valeurs données (Q$_R$) de la quantité distribuée sur une gamme ([Q$_{Rmin}$ ; Q$_{Rmax}$]) de valeurs de la quantité à mesurer,
- un modèle mathématique décrivant les indications de mesure (MI$_m$) en tant que fonction (f(Q$_R$)) d'un ordre donné (m) de la valeur donnée (Q$_R$) de la propriété à mesurer est fourni, et
- les propriétés caractéristiques (E) des indications de mesure (MI$_i$) comprennent :
- une propriété (E$_c$) donnée par un vecteur dimensionnel m+1 (c) de coefficients (c$_0$, ..., c$_m$) du modèle déterminé en ajustant les indications de mesure enregistrées (MI$_i$) au modèle, et
- un écart quadratique moyen (E$_\Delta$) entre les indications de mesure enregistrées (MI$_i$) et les indications de mesure correspondantes (MI$_m$), déterminées par le modèle mathématique basé sur les coefficients (c$_0$, ..., c$_m$) déterminés sur la base des indications de mesure (MI$_i$) enregistrées et les valeurs données (Q$_{Ri}$) respectives de la quantité mesurée.

**9.** Procédé selon la revendication 1, 2, 3 ou 4, pour lequel

- au moins l'une des procédures opératoires prévoit des mesures de la valeur données (Q$_R$) de la quantité à mesurer aux valeurs sélectionnées (T$_{Ri}$) ou sur une gamme prédéterminée ([T$_{min}$ < T$_R$ < T$_{max}$]) de valeurs (T$_R$) d'une variable (T) relative à la mesure,
- un modèle mathématique décrivant les indications de mesure (MI$_k$) en tant que fonction (g(T, Q$_R$)) d'un ordre (k) donné de la variable (T) et de la valeur donnée (Q$_R$) de la quantité à mesurer est fourni, et
- les propriétés caractéristiques (E) des indications de mesure (MI$_i$) comprennent :
- une propriété (E$_d$) données par un vecteur dimensionnel k+1 de coefficients (do, ..., d$_k$) du modèle déterminé en ajustant les indications de mesure enregistrées (MI$_i$) au modèle, et
- un écart quadratique moyen (E$_\Delta$) entre les indications de mesure enregistrées (Mli) et les indications de mesure correspondantes (MI$_k$), déterminées par le modèle mathématique basé sur les coefficients (d$_0$, ..., d$_k$) déterminés sur la base des indications de mesure enregistrées (MI$_i$), les valeurs (T$_{Ri}$) de la variable et la valeur donnée (Q$_R$) de la quantité à mesurer.

**10.** Procédé selon l'une des revendications précédentes, pour lequel une longueur d'un intervalle de temps d'étalonnage après lequel l'appareil devra être réétalonné est définie sur la base d'un degré de conformité de chacune des au moins une propriété caractéristique (E) avec la gamme de seuil (E$_R$) respective déterminée pendant l'étalonnage.

**11.** Procédé selon les revendications 3 et 10, pour lequel une propriété de mesure potentiellement altérée a été indiquée, et la longueur de l'intervalle de temps d'étalonnage est en outre basée sur le niveau de fiabilité de cette indication de la propriété de mesure potentiellement altérée.

Fig. 1

EP 2 551 650 B1

Fig.2

EP 2 551 650 B1

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006052959 A1

- US 2004220761 A1

**Non-patent literature cited in the description**

- **JEAN-MICHEL POU ; DIMITRI VAISSIERE.** La Signature Des Processus D'Etalonnage: Les Etalonnages Vus Sous L'Angle Statistique. *the conference Congres de Métrologie de Lyon,* 2005

- Probabilistic measurement evaluation for the implementation of the Measurement Instrument Directive. **FRANCESCO CRENNA ; GIOVANNI B. ROSSI ; LUCA BOVIO.** Measurement. Institute of Measurement and Control, 01 December 2009, vol. 42, 1522-1531